# EUROPEAN PATENT SPECIFICATION

(11) **EP 2 166 237 B1**
(45) Date of publication and mention of the grant of the patent: **31.10.2012**
(21) Application number: 09252185.5
(22) Date of filing: 15.09.2009
(51) Int. Cl.: F16B 35/06, F16B 37/06

(54) **Clinch bolt**
Vernieteter Bolzen
Boulon de rivet

(30) Priority: 19.09.2008 JP 2008240377
(43) Date of publication of application: 24.03.2010
(73) Proprietor: Pias Sales Co., Ltd., Osaka (JP)
(72) Inventor: Shinjo, Kimio, Osaka (JP)
(74) Representative: Price, Paul Anthony King

(56) References cited:
- US-A- 5 797 175

## Description

### BACKGROUND OF THE INVENTION

### 1. Field of the Invention

The present invention relates to a clinch bolt for fixing by crimping and coupling, by inserting a screw shaft part into a mounting hole pierced in a metal plate, and pressing a head part to the metal plate.

### 2. Background Art

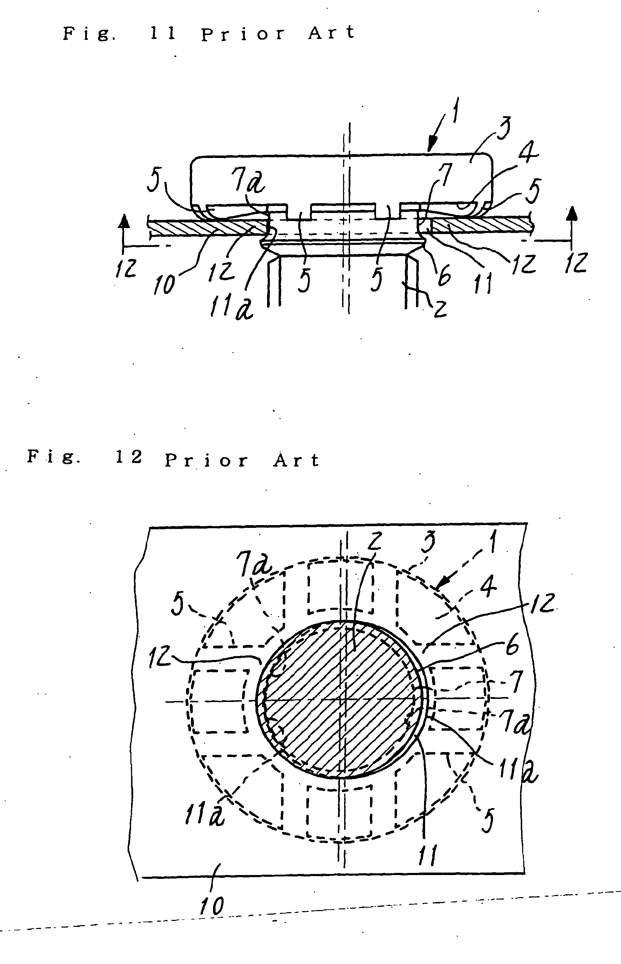

For example, a clinch bolt 1 is hitherto known as shown in Fig. 11 and Fig. 12, in which crimping protuberances 5 are provided on a seat surface 4 of a head part 3, an annular ridge part 6 of a larger diameter than the outside diameter of a screw shaft part 2 is formed in an under-neck portion immediately beneath the seat surface 4, and an annular groove 7 is formed between the annular ridge part 6 and the seat surface 4, and more specifically the screw shaft part 2 is inserted into a mounting hole 11 slightly larger than the outside diameter of the annular ridge part 6 pierced into a metal plate 10, the head part 3 is pressed to the metal plate 10, the crimping protuberances 5 are press-fitted into the peripheral edge 12 of the mounting hole 11, and the peripheral edge 12 is crimped and deformed to bite into the annular groove 7, so as to be fixed tightly to the metal plate 10.

Since the mounting hole 11 pierced in the metal plate 10 for fixing the clinch bolt 1 has a slightly larger diameter than the annular ridge part 6, when the screw shaft part 2 is inserted into the mounting hole 11, and the crimping protuberances 5 protruding from the seat surface 4 of the head part 3 are positioned to abut against the metal plate 10, a considerable dimensional difference exists between the inner periphery 11a of the mounting hole 11 and the wall 7a of the annular groove 7. Hence, in particular, when the metal plate is thin, as shown in the drawing, a misalignment may occur between the mounting hole 11 in the metal plate 10 and the annular groove 7 of the clinch bolt 1. If the head part 3 is pressed, crimped and coupled into the metal plate 10 in such misaligned state, the deformation amount of the peripheral edge 12 of the mounting hole 11 biting into the annular groove 7 by crimping and deforming is not uniform, and the clinching force may be insufficient.

US-5,797,175-A discloses a clinch bolt having the features of the pre-characterizing portion of claim 1.

### SUMMARY OF THE INVENTION

Thus, there is a need for a clinch bolt capable of obtaining a stable clinching force, without occurrence of misalignment between the mounting hole in the metal plate and the annular groove of the clinch bolt.

The present invention provides a clinch bolt having crimping protuberances formed on a seat surface of a head part, having an annular ridge part of a larger diameter than the outside diameter of a screw shaft part and formed on an under-neck portion immediately beneath the seat surface, and having an annular groove formed between the annular ridge part and the seat surface, for inserting the screw shaft part into a mounting hole slightly larger than the outside diameter of the annular ridge part and pierced into a metal plate, pressing the head part to the metal plate, press-fitting the crimping protuberances into the peripheral sedge of the mounting hole, and crimping and deforming the peripheral edge to bite into the annular groove, so as to be fixed tightly to the metal plate, characterized in that at least three misalignment preventive protuberances projecting from the wall of the annular groove in the radial direction are disposed at intervals in the circumferential direction, and the distal ends of the misalignment preventive protuberances are disposed on a virtual circumference of nearly same diameter as (or slightly greater diameter than) the diameter of the annular ridge part.

To prevent the inner periphery of the mounting hole from being engaged with the annular groove, preferably the lateral sectional shape of the misalignment preventive protuberances is formed in a pointed triangular or pentagonal shape, or in a narrow trapezoidal or rectangular shape. At least three protuberances are needed, and up to five may be preferred in order to prevent the inner periphery of the mounting hole from being engaged with the annular groove.

Preferably, the outer edges of the misalignment preventive protuberances are formed in a taper shape which widens in the upward direction from the outer periphery of the annular ridge part toward the seat surface, and when the screw shaft part is inserted into the mounting hole until the seat surface of the head part is closer to the metal plate, the tapered outer edges of the misalignment preventive protuberances contact with the inner periphery of the mounting hole, and are aligned by the automatic centering action, and misalignment can be effectively prevented.

As explained herein, according to the present invention, in a simple configuration having at least three misalignment preventive protuberances projecting from the wall of the annular groove in the radial direction formed between the annular ridge part provided in the under-neck portion immediately beneath the seat surface of the head part and the seat surface, it is effective to prevent securely misalignment between the mounting hole in the metal plate and the annular groove, and therefore a stable clinching force is obtained.

### BRIEF DESCRIPTION OF DRAWINGS

Fig. 1 is a front view of a clinch bolt of the present invention.
Fig. 2 is a bottom view of the same as seen from the screw shaft part side.
Fig. 3 is a magnified sectional view along line 3-3 in Fig. 1.
Fig. 4 is a part longitudinal front view showing a preparatory step before crimping process for fixing the clinch bolt to a metal plate.
Fig. 5 is a sectional view along line 5-5 in Fig. 4.
Fig. 6 is a part longitudinal front view showing a coupling step of fixing the clinch bolt to a metal plate.
Fig. 7 is a sectional view along line 7-7 in Fig. 6.
Fig. 8 is a plan view showing other preferred embodiment of misalignment preventive protuberances in the clinch bolt.
Fig. 9 is a part longitudinal front view showing a preparatory step before crimping process for fixing the clinch bolt of the present invention to a metal plate having misalignment preventive protuberances in another preferred embodiment.
Fig. 10 is a part magnified explanatory diagram of the same.
Fig. 11 is a part longitudinal front view showing a preparatory step before crimping process for fixing a conventional clinch bolt to a metal plate.
Fig. 12 is a sectional view along line 12-12 in Fig. 11.

### DETAILED DESCRIPTION OF THE INVENTION

Referring now to the drawings, preferred embodiments of the present invention are specifically described below.

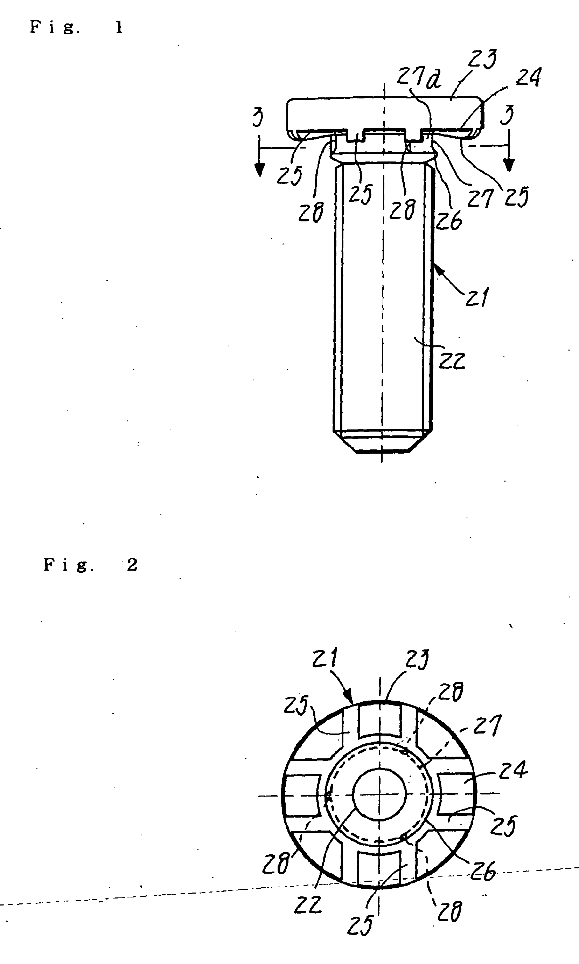

Fig. 1 to Fig. 3 show the clinch bolt of the present invention. The basic configuration of the clinch bolt 21 is common to the conventional clinch bolt 1 shown in Fig. 11 and Fig. 12, that is, crimping protuberances 25 are projecting like a lattice from a seat surface 24 of a head part 23 consecutively provided at the upper end of a screw shaft part 22, and each crimping protuberance 25 is gradually increased in thickness from the inside to the outside of the seat surface 24. In the under-neck portion immediately beneath the seat surface 24, an annular ridge part 26 of a larger diameter than the outside diameter of the screw shaft part 22 is projecting, and an annular groove 27 is formed between the annular ridge part 26 and the seat surface 24, and so far the configuration is same as in the prior art, except that three misalignment preventive protuberances 28 projecting in the radial direction are provided in a wall surface 27a of the annular groove 27 at equal intervals in the circumferential direction.

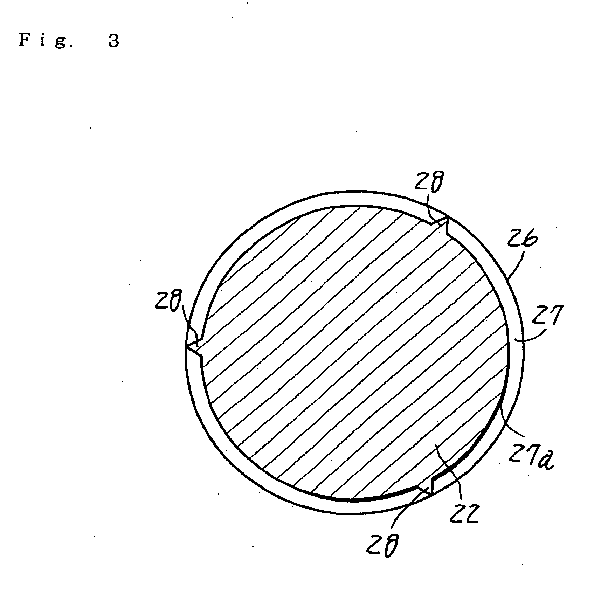

The misalignment preventive protuberances 28 are more specifically shown in Fig. 3, in which the lateral sectional shape is a pointed triangular shape, and the leading end is disposed on a virtual circumference having a nearly same diameter as the diameter of the annular ridge part 26.

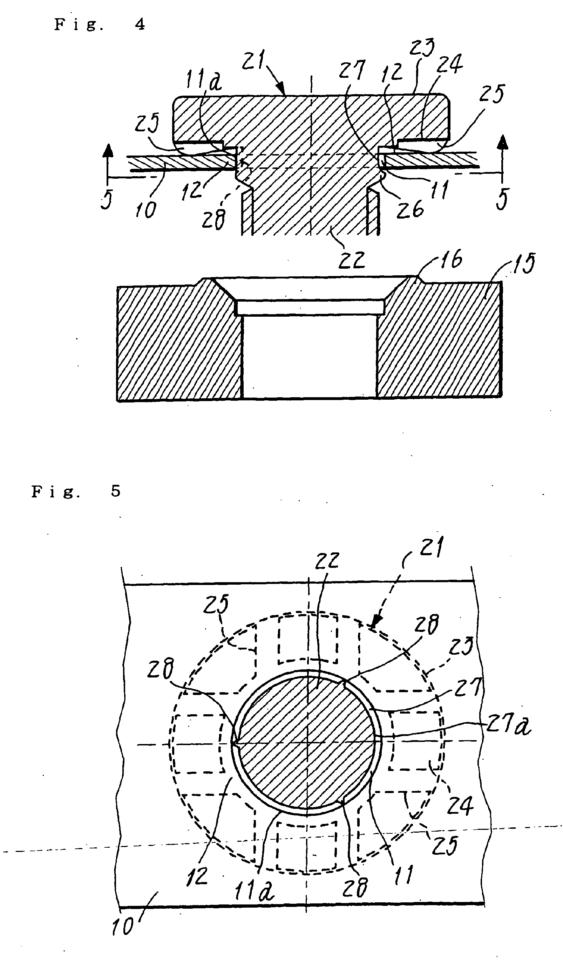

Fig. 4 to Fig. 7 show the crimping process of fixing the clinch bolt 21 having such configuration to the metal plate 10 by crimping and coupling, in which the metal plate 10 is preliminarily provided with a mounting hole 11 slightly larger than the outside diameter of the annular ridge part 26. This point is same as shown in Fig. 11.

Fig. 4 and Fig. 5 show the preparatory step before the crimping process, in which the screw shaft part 22 is inserted into the mounting hole 11, and the seat surface 24 of the head part 23 is brought closer to the metal plate 10, and each crimping protuberance 25 is in a positioning state abutting against the metal plate 10. At this time, as explicitly shown in Fig. 5, the leading ends of the three misalignment preventive protuberances 28 are engaged with the inner periphery 11a of the mounting hole 11, and they are positioned almost concentrically in a state of preventing misalignment between the mounting hole 11 and the annular groove 27. Moreover, since the lateral sectional shape of the misalignment preventive protuberances 28 is formed in a pointed triangular shape, when the screw shaft part 22 is inserted in the mounting hole 11, the inner periphery 11a of the mounting hole 11 is not prevented from being engaged with the annular groove 27. If the number of the misalignment preventive protuberances 28 is too many, the inner periphery 11a of the mounting hole 11 may be prevented from being engaged with the annular groove 27, and hence the number of the misalignment preventive protuberances 28 is not more than five. Fig. 4 shows the location of a blanking die 15 for use in a next crimping process.

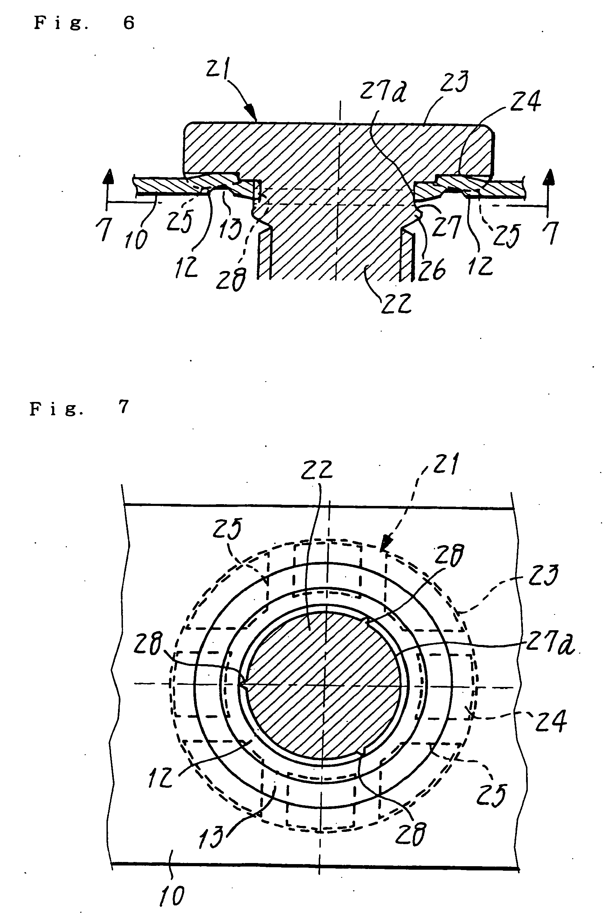

Fig. 6 and Fig. 7 show the crimping process of the clinch bolt 21, in which the head part 23 is pressed to the metal plate 10, and in cooperation with an annular projecting part 16 of the blanking die 15 shown in Fig. 4, the crimping protuberances 25 projecting from the seat surface 24 and the annular projecting part 16 of the blanking die 15 are pressed to the peripheral edge 12 of the mounting hole 11, and the peripheral edge 12 is crimped and deformed to bite into the annular groove 27, and is crimped and coupled to the under-neck portion immediately beneath the head part 23 by a stable clinching force, so that the clinch bolt 21 is fixed to the metal plate 10. At this time, an annular recess groove 13 is formed in the peripheral edge 12 by the annular projecting part 16 of the blanking die 15.

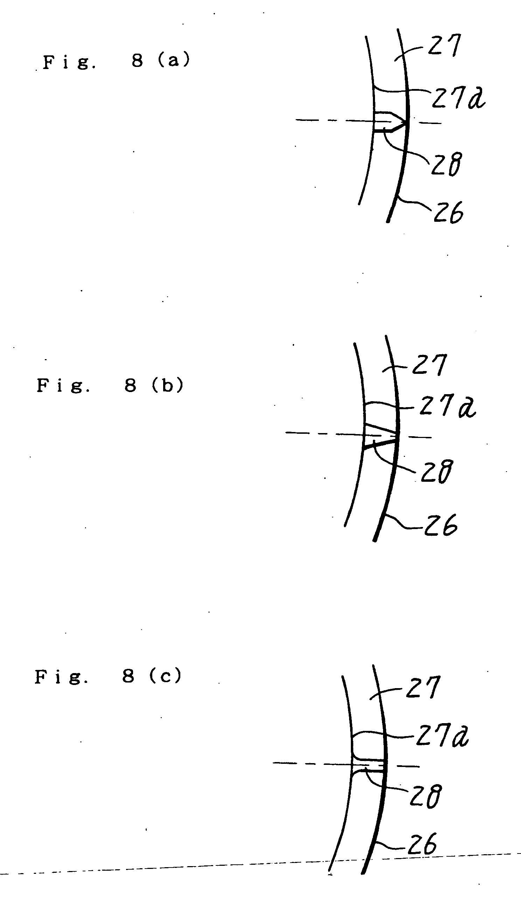

Fig. 8 shows other preferred embodiment of the misalignment preventive protuberances 28, in which (a) shows the lateral sectional shape formed in a pointed pentagonal shape, and (b) and (c) show the inner periphery of the mounting hole 11 formed in a lateral sectional shape of a narrow trapezoidal or rectangular shape so as not to interfere engagement with the annular groove 27.

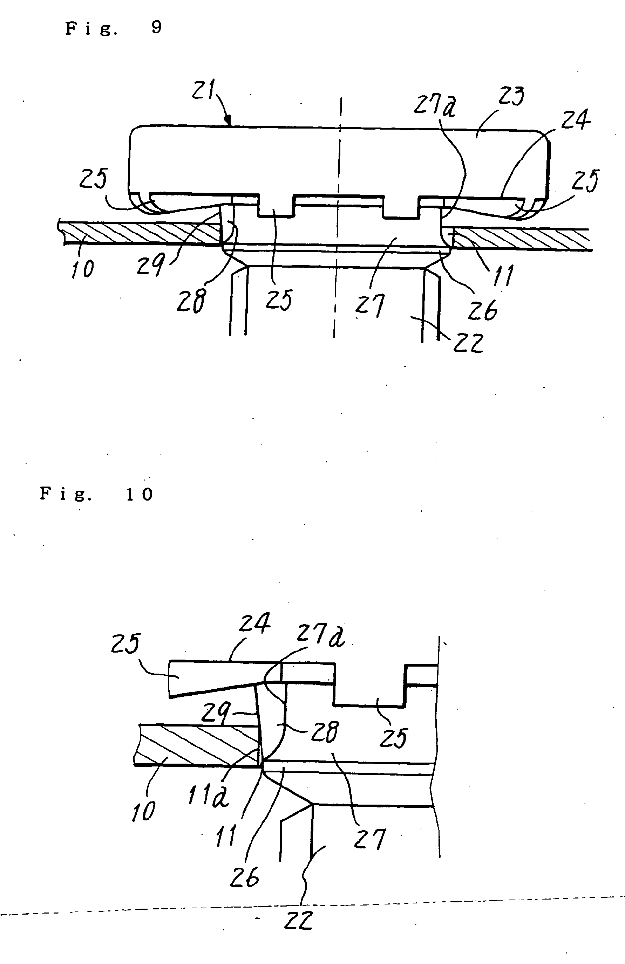

Fig. 9 and Fig. 10 show another preferred embodiment. In this preferred embodiment, the lateral sectional shape of the misalignment preventive protuberances 28 is pointed same as in the foregoing preferred embodiment, but their outer edges 29 are formed in a taper shape spreading widely toward the seat surface 24. In such configuration, when the seat surface 24 of the head part 23 is brought closer to the metal plate 10 by inserting the screw shaft part 22 into the mounting hole 11 of the metal plate 10, before the crimping protuberances 25 abut against the metal plate 10, as shown in the drawing, the tapered outer edges 29 of the misalignment preventive protuberances 28 contact with the inner periphery 11a of the mounting hole 11, and the screw shaft part 22 is aligned concentrically with the mounting hole 11 by the self-centering action, so that misalignment between the mounting hole 11 and the annular groove 27 can be securely prevented, and a more stable clinching force is obtained.

## Claims

1. A clinch bolt (21) having crimping protuberances (25) formed on a seat surface (24) of a head part (23), having an annular ridge part (26) of a larger diameter than the outside diameter of a screw shaft part (22) and formed on an under-neck portion immediately beneath the seat surface (24), and having an annular groove (27) formed between the annular ridge part (26) and the seat surface (24), for inserting the screw shaft part (22) into a mounting hole (11) slightly larger than the outside diameter of the annular ridge part (26) and pierced into a metal plate (10), pressing the head part (23) to the metal plate (10), press-fitting the crimping protuberances (25) into the peripheral edge (11a) of the mounting hole (11), and crimping and deforming the peripheral edge (11a) to bite into the annular groove (27), so as to be fixed tightly to the metal plate (10),
**characterized in that** at least three misalignment preventive protuberances (28) projecting from the wall (27a) of the annular groove (27) in the radial direction are disposed at intervals in the circumferential direction, and the distal ends of the misalignment preventive protuberances (28) are disposed on a virtual circumference of nearly same diameter as the diameter of the annular ridge part (26).

2. The clinch bolt (21) of claim 1, wherein the lateral sectional shape of the misalignment preventive protuberances (28) is formed in a pointed triangular or pentagonal shape.

3. The clinch bolt (21) of claim 1, wherein the lateral sectional shape of the misalignment preventive protuberances (28) is formed in a narrow trapezoidal or rectangular shape.

4. The clinch bolt (21) of claim 1, 2 or 3, wherein the outer edges (29) of the misalignment preventive protuberances (28) are formed in a taper shape which widens in the direction from the outer periphery of the annular ridge part (26) toward the seat surface (24).

5. The clinch bolt (21) of any preceding claim, wherein the distal ends of the misalignment preventive protuberances (28) are disposed on a virtual circumference of slightly greater diameter than the diameter of the annular ridge part (26).

## Patentansprüche

1. Vernieteter Bolzen (21) mit Quetschvorsprüngen (25), die an einer Sitzfläche (24) eines Kopfteils (23) ausgebildet sind, mit einem ringförmigen Stegteil (26), der einen größeren Durchmesser aufweist als der Außendurchmesser eines Schraubenschaftteils (22) und an einem Unterhalsteil unmittelbar unterhalb der Sitzfläche (24) ausgebildet ist, und mit einer Ringnut (27), die zwischen dem ringförmigen Stegteil (26) und der Sitzfläche (24) ausgebildet ist, zum Einführen des Schraubenschaftteils (22) in ein Montageloch (11), das etwas größer ist als der Außendurchmesser des ringförmigen Stegteils (26) und in einer Metallplatte (10) ausgebildet ist, Pressen des Kopfteils (23) zur Metallplatte (10), Einpressen der Quetschvorsprünge (25) in den Umfangsrand (11a) des Montagelochs (11) und Quetschen und Verformen des Umfangsrands (11a) zum Eingreifen in die Ringnut (27), um fest an der Metallplatte (10) angebracht zu werden,
**dadurch gekennzeichnet, dass** mindestens drei Fehlausrichtungsverhinderungsvorsprünge (28), die von der Wand (27a) der Ringnut (27) in Radialrichtung ragen, in Abständen in Umfangsrichtung angeordnet sind und die distalen Enden der Fehlausrichtungsverhinderungsvorsprünge (28) auf einem gedachten Umfang von nahezu dem gleichen Durchmesser wie der Durchmesser des ringförmigen Stegteils (26) angeordnet sind.

2. Vernieteter Bolzen (21) nach Anspruch 1, wobei die Querschnittsform der Fehlausrichtungsverhinderungsvorsprünge (28) in einer zugespitzten Dreiecks- oder Fünfecksform ausgebildet ist.

3. Vernieteter Bolzen (21) nach Anspruch 1, wobei die Querschnittsform der Fehlausrichtungsverhinderungsvorsprünge (28) in einer schmalen Trapez- oder Rechteckform ausgebildet ist.

4. Vernieteter Bolzen (21) nach Anspruch 1, 2 oder 3, wobei die Außenränder (29) der Fehlausrichtungsverhinderungsvorsprünge (28) in einer Konusform ausgebildet sind, die sich in Richtung von dem Außenumfang des ringförmigen Stegteils (26) zur Sitzfläche (24) verbreitert.

5. Vernieteter Bolzen (21) nach einem vorhergehenden Anspruch, wobei die distalen Enden der Fehlausrichtungsverhinderungsvorsprünge (28) auf einem gedachten Umfang mit etwas größerem Durchmesser als der Durchmesser des ringförmigen Stegteils (26) angeordnet sind.

## Revendications

1. Boulon de rivet (21) ayant des protubérances de sertissage (25) formées sur une surface de siège (24) d'une partie de tête (23), ayant une partie de crête annulaire (26) de plus grand diamètre que le diamètre extérieur d'une partie de tige filetée (22) et formée sur une portion sous-col immédiatement sous la surface de siège (24), et ayant une gorge annulaire (27) formée entre la partie de crête annulaire (26) et la surface de siège (24), pour insérer la partie de tige filetée (22) dans un trou de montage (11) légèrement plus grand que le diamètre extérieur de la partie de crête annulaire (26) et percé dans une plaque métallique (10), pour presser la partie de tête (23) contre la plaque métallique (10), pour ajuster par serrage les protubérances de sertissage (25) dans le bord périphérique (11a) du trou de montage (11) et pour sertir et déformer le bord périphérique (11a) de manière à ce qu'il morde dans la gorge annulaire (27), de manière à être fixé fermement à la plaque métallique (10),
**caractérisé en ce qu'**au moins trois protubérances (28) empêchant un mauvais alignement, faisant saillie depuis la paroi (27a) de la gorge annulaire (27) dans la direction radiale, sont disposées à intervalles dans la direction circonférentielle, et les extrémités distales des protubérances (28) empêchant un mauvais alignement sont disposées sur une circonférence virtuelle ayant pratiquement le même diamètre que le diamètre de la partie de crête annulaire (26).

2. Boulon de rivet (21) selon la revendication 1, dans lequel la forme en section latérale des protubérances (28) empêchant un mauvais alignement est formée en une forme pentagonale ou triangulaire pointue.

3. Boulon de rivet (21) selon la revendication 1, dans lequel la forme en section latérale des protubérances (28) empêchant un mauvais alignement est formée en une forme trapézoïdale ou rectangulaire étroite.

4. Boulon de rivet (21) selon la revendication 1, 2, ou 3, dans lequel les bords externes (29) des protubérances (28) empêchant un mauvais alignement sont formés en une forme conique qui s'élargit dans la direction allant depuis la périphérie externe de la partie de crête annulaire (26) vers la surface de siège (24).

5. Boulon de rivet (21) selon l'une quelconque des revendications précédentes, dans lequel les extrémités distales des protubérances (28) empêchant un mauvais alignement sont disposées sur une circonférence virtuelle de diamètre légèrement supérieur au diamètre de la partie de crête annulaire (26).
